# FASCICULE DE BREVET EUROPEEN

(11) **EP 2 723 673 B1**
(45) Date de publication et mention de la délivrance du brevet: **22.01.2020**
(21) Numéro de dépôt: 12728620.1
(22) Date de dépôt: 22.06.2012
(51) Int. Cl.: B68B 1/06, A61D 7/00

(54) **MORS ET SYSTÈME POUR ENVOYER UNE SUBSTANCE VISQUEUSE ET/OU LIQUIDE DANS LA BOUCHE D'UN ANIMAL**
GEBISS UND SYSTEM ZUR ZUFÜHRUNG EINER FLÜSSIGKEIT UND/ODER EINER VISKOSEN MASSE IN EIN TIERMAUL
BIT AND SYSTEM FOR SENDING A VISCOUS AND/OR LIQUID SUBSTANCE INTO AN ANIMAL'S MOUTH

(30) Priorité: 24.06.2011 CH 10722011
(43) Date de publication de la demande: 30.04.2014
(73) Titulaire: Hall, Heidi, 1468 Cheyres (CH)
(72) Inventeur: Hall, Heidi, 1468 Cheyres (CH)
(74) Mandataire: P&TS SA (AG, Ltd.)
(86) Numéro de dépôt international: PCT/EP2012/062146
(87) Numéro de publication internationale: WO 2012/175710

(56) Documents cités:
- EP-A1- 2 335 771
- EP-A1- 2 452 638
- EP-A1- 2 514 477
- EP-A2- 2 471 488
- WO-A1-02/09797
- WO-A1-92/06651
- WO-A1-98/26652
- WO-A1-98/26652
- WO-A1-98/46293
- WO-A1-2005/099617
- WO-A1-2005/117745
- WO-A1-2010/105309
- WO-A1-2011/029208
- WO-A1-2011/052073
- WO-A1-2011/086175
- WO-A1-2011/106802
- WO-A1-2011/125073
- WO-A1-2012/013429
- WO-A1-2012/016328
- WO-A1-2012/034167
- WO-A1-2012/054611
- WO-A1-2012/066177
- WO-A1-2012/096657
- WO-A1-2012/098335
- WO-A1-2012/111015
- WO-A1-2012/111539
- WO-A1-2012/112355
- WO-A1-2012/114340
- WO-A1-2012/149099
- WO-A1-2012/151553
- WO-A1-2012/151583
- WO-A1-2012/155193
- WO-A1-2012/176029
- WO-A1-2017/187405
- WO-A1-2018/048745
- WO-A1-2018/112287
- WO-A2-2005/081922
- WO-A2-2008/024814
- WO-A2-2008/143529
- WO-A2-2009/099869
- WO-A2-2011/103065
- WO-A2-2012/013782
- WO-A2-2012/054085
- CH-A1- 705 153
- CN-A- 104 840 362
- DE-A1- 2 404 007
- DE-A1- 19 500 520
- DE-A1- 19 500 520
- DE-U1- 9 400 402
- FR-A1- 2 752 417
- FR-A1- 2 863 162
- FR-A1- 2 863 162
- GB-A- 135 448
- GB-A- 2 286 324
- GB-A- 2 286 324
- GB-A- 2 473 540
- GB-A- 190 704 027
- US-A- 4 040 422
- US-A- 4 535 724
- US-A- 4 535 724

## Description

### Domaine technique

La présente invention concerne un mors et un système pour envoyer des substances visqueuses et/ou liquides dans la bouche d'un animal. Un tel mors est par exemple connu de la publication WO 98/26652 A1.

### Etat de la technique

Un mors est une pièce destinée à être insérée dans la bouche d'un animal, par exemple un cheval, afin de le conduire et régler son allure. Généralement il traverse la bouche au-dessus de la langue du cheval.

Il est composé d'une ou plusieurs parties droites ou incurvées se trouvant dans la bouche du cheval, appelées canons, et d'un anneau de chaque côté qui est externe à la bouche et fixé aux brides. Un mors brisé est composé par un, deux ou plusieurs canons. Il peut comprendre une ou plusieurs brisures.

Dans ce contexte le mot « bride » ou « bridon » désigne un ensemble de lanières en général en cuir placées sur la tête de l'animal afin de maintenir le mors en place. Ces lanières peuvent comprendre des rênes.

Un mors peut être utilisé aussi pour d'autres buts, par exemple pour envoyer dans la bouche d'un cheval une substance pour différentes raisons : par exemple une substance qui permette d'activer la salivation du cheval, de maintenir sa bouche humide, de favoriser sa mastication, de l'alimenter, de lui donner des médicamentes ou des récompenses, de favoriser l'acceptation du mors, etc. Généralement les substances utilisées pour ces différentes raisons sont liquides, type sirop, ou visqueuses, type purée ou pâte.

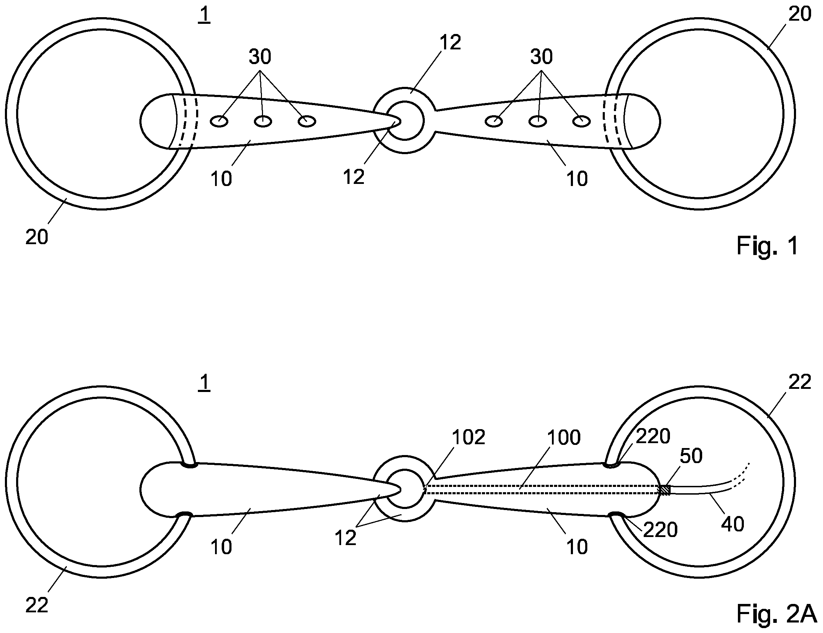

Des mors connus comprennent des canons creux pour envoyer cette substance dedans le mors et un ou plusieurs trous sur la surface latérale extérieure des canons qui permettent d'envoyer cette substance dans la bouche du cheval. Un exemple d'un de ces mors connus est illustré sur la figure 1.

Cependant la présence de ces trous sur la surface extérieure des canons implique plusieurs désavantages : le contact de la langue du cheval avec la surface du mors vient obstruer les trous. En outre il existe un risque réel d'occlusion de ces trous par exemple par de l'herbe mangée par le cheval. Enfin, puisque ces trous appartiennent à la surface extérieure des canons, ils ne permettent pas l'envoi d'une substance directement au milieu de la bouche du cheval, ce qui permettrait une diffusion plus efficace de la substance dans la bouche du cheval. De plus, si ces trous ne sont pas bien réalisés, ils risquent de blesser la bouche et la langue du cheval.

Finalement la présence de ces trous provoque dans la bouche du cheval une sensation différente de celle causée par un mors qui ne permet pas l'envoi de substances dans sa bouche et qui a la surface des canons lisse : donc le cheval peut être dérangé par cette sensation nouvelle et par exemple peut ne pas accepter des médicaments envoyés dans sa bouche par les mors connus, ou avoir des réactions brutales qui peuvent être dangereuses pour un cavalier.

Le document FR2752417 décrit un mors creux permettant l'insertion d'un composant aromatique sous forme de tablettes placées dans les canons creux refermés par un bouchon. Quatre trous de 2 mm de diamètre situés sur la partie supérieure du mors permettent aux tablettes de diffuser dans la bouche du cheval.

Le document GB190704027 décrit un autre mors creux afin d'y insérer un tube de liquide qui se diffuse par des trous dans la bouche du cheval.

Le document DE2404007 décrit un mors présentant des trous permettant l'administration d'un médicament ou d'un aliment.

Les mors connus demandent en outre au cavalier qui souhaite envoyer une substance dans la bouche du cheval de descendre du cheval pour injecter la substance dans le mors à l'aide d'une seringue, comme décrit dans les documents WO10105309, WO05117745, US2001032444, WO9206651, ou avec un piston comme décrit dans les documents US5557905 et US4040422.

Le document DE9400402U décrit un mors creux doté de trous sur la surface extérieure des canons et connecté à un conduit d'alimentation et un réservoir contenant une solution sucrée ou un médicament. Le cavalier peut presser sur le réservoir en forme de ballon afin d'envoyer une dose de liquide au cheval. Le réservoir est placé près de la selle de manière à ce que le cavalier puisse l'activer sans avoir à descendre du cheval. Cependant il doit enlever au moins une des ses mains des rênes pour presser sur le réservoir, ce qui peut être dangereux. En outre la pression doit être exercée par le cavalier de façon presque continue et avec une certaine énergie au moins pendant un certain moment, afin d'envoyer une quantité suffisante de substance dans la bouche du cheval, ce qui peut faire diminuer la concentration et les forces du cavalier. Enfin le cavalier doit aussi se rappeler de temps en temps de presser sur le réservoir.

US5566645 décrit un mors et un système pour envoyer une substance dans la bouche d'un cheval comprenant un réservoir lié au tronc d'un cavalier par une ceinture, un tuyau connecté à une valve pour régler le débit de la substance, la valve étant reliée à travers d'un autre tuyau à un canon d'un mors. Le canon comprend un canal terminant avec une première ouverture reliée au tuyau et une autre ouverture qui sort la substance dans la bouche du cheval. Encore une fois cette dernière ouverture appartient à la surface latérale extérieure du canon, comme les trous de la figure 1.

GB135448 décrit un mors creux adapté pour contenir des récipients médicaux afin d'envoyer dans la bouche d'un cheval des médicaments à travers des ouvertures à l'aide de ressorts. Ces ouvertures appartiennent à la surface latérale extérieure du canon, comme les trous de la figure 1.

US20110061349 décrit un mors et un système pour envoyer une substance dans la bouche d'un cheval comprenant un réservoir constitué par deux poches placées sur le dos du cheval et une pompe permettant d'envoyer une substance dans la bouche du cheval à travers d'un tuyau connecté au mors. Le mors ne comprend pas d'ouvertures mais il est lié par des moyens amovibles à un tuyau externe le long de sa surface extérieure.

Il existe donc un besoin pour un mors et un système pour envoyer une substance visqueuse et/ou liquide dans la bouche d'un animal qui permette de réduire ou d'éviter au moins un des désavantages des mors connus mentionnés.

### Bref résumé de l'invention

Un but de la présente invention est de proposer un mors exempt des limitations des mors connus.

Un autre but de l'invention est de proposer un mors qui permette de réduire ou annuler le risque de blesser la bouche du cheval.

Un autre but de l'invention est de proposer un mors qui permette l'envoi d'une substance directement au milieu de la bouche du cheval.

Un autre but de l'invention est de proposer un mors qui permette au cheval d'avoir dans la bouche la même sensation que celle d'un mors classique.

Un autre but de l'invention est de proposer un système pour envoyer une substance visqueuse et/ou liquide dans la bouche d'un animal qui évite au cavalier de descendre du cheval et/ou de diminuer sa concentration et ses forces.

Selon l'invention, ces buts sont atteints notamment au moyen d'un mors selon la revendication 1 et au moyen d'un système pour envoyer une substance visqueuse et/ou liquide dans la bouche d'un animal selon la revendication 3.

Le mors selon l'invention comprend au moins deux canons, au moins un canon comprenant un canal traversant longitudinalement le canon d'une extrémité à l'autre. La présence de ce canal permet avantageusement l'envoi d'une substance visqueuse et/ou liquide et/ou en purée directement au milieu de la bouche d'un animal.

En outre, grâce à la présence de ce canal, les trous sur la surface latérale extérieure des canons ne sont plus nécessaires. La surface latérale extérieure des canons peut donc être lisse, sans interruptions, ce qui annule complètement le risque de blesser la bouche du cheval.

La présence du canal traversant longitudinalement au moins un canon d'une extrémité à l'autre permet avantageusement l'envoi d'une substance directement au milieu de la bouche du cheval, ce qui favorise une diffusion plus efficace et symétrique de la substance dans la bouche du cheval.

En outre l'absence de trous sur les surfaces latérales permet d'éviter le risque de leur occlusion quand le cheval mange ; la langue du cheval ne peut pas obstruer la sortie des substances. L'absence de trous permet aussi au cheval d'avoir dans la bouche la même sensation que celle d'un mors classique.

Le mors selon l'invention peut être en simple ou double brisure. Il peut être aussi un mors à anneaux à olives.

Dans une variante le ou les canaux qui traversent un canon d'une extrémité à l'autre sont sensiblement horizontaux, c'est-à-dire sensiblement parallèles à la direction principale du canon, ou en d'autres termes à la direction correspondant à sa longueur. Dans ce contexte l'adverbe « sensiblement » indique que des petites tolérances, liées par exemple à la mesure de l'angle, peuvent être acceptées.

Dans une autre variante le ou les canaux qui traversent un canon d'une extrémité à l'autre forment un angle par rapport à la direction horizontale définie ci-dessus : par exemple un canal peut former avec la direction horizontale un angle dont l'amplitude est de préférence inférieure à 20°, par exemple 10°. En effet un canon réel présente souvent une forme légèrement incurvée. En plus en correspondance de sa partie centrale il comprend une barre métallique horizontale, et la réalisation d'un canon sensiblement horizontale en correspondance de cette barre pourrait compliquer la fabrication du mors selon l'invention ou permettrait d'avoir un mors moins robuste. Dans cette variante le canal, même si incliné, traverse toujours le canon d'une extrémité à l'autre, et permet l'envoi d'une substance directement au milieu de la bouche du cheval, car sa position en correspondance de l'extrémité du canon qui est dans la bouche du cheval reste inchangée par rapport à la variante où le canal est sensiblement horizontal.

Le mors selon l'invention ne change en rien la sensation que le cheval a dans sa bouche avec le contact du mors comparé à un mors lisse et en particulier sur sa langue puisque l'extrémité des canaux arrive au niveau des brisures et n'est pas en contact avec la bouche et/ou la langue fragile du cheval.

Il n'y aura de ce fait aucun changement des habitudes du cheval ou du cavalier qui peut donc utiliser ce mors de façon classique ou se servir des canaux. Le ou les canaux permettent au cavalier d'envoyer des médications orales sécurisées et/ou d'activer la salivation du cheval de façon passive et/ou de récompenser le cheval de façon active et extemporanée.

Selon un aspect ne faisant pas partie de l'invention le mors est agencé pour être connecté à un réservoir d'une substance visqueuse et/ou liquide à travers un tuyau, la connexion entre le mors et le tuyau et/ou entre le tuyau et le réservoir étant non standardisée. Dans ce contexte l'expression « connexion non standardisée » désigne une connexion propriétaire qui permet de relier le mors et/ou le réservoir à un seul et unique type de tuyau et qui évite que le mors et/ou le réservoir puisse être relié à tout autre tuyau. Par exemple cette connexion peut être du type mâle-femelle, avec un système de verrouillage, par exemple un système de vissage, ayant des dimensions, une forme et un filetage différents des dimensions, formes et filetages connus. Un exemple de cette connexion est décrit dans le document EP1689343 de Vygon.

Le mors selon l'invention est donc « polyvalent », parce qu'il permet au cavalier de choisir entre différentes fonctions : le cavalier peut en effet choisir une utilisation en mors simple (canons lisses ne changeant pas l'utilisation classique du mors - la sensation dans la bouche du cheval reste la même), une utilisation en mors avec une fonction d'activation de salivation, une utilisation de ce mors en vue de récompenser au cours du travail donc à cheval, ou les deux. L'utilisation de ce mors permet aussi le débourrage d'un jeune cheval pour que celui-ci accepte facilement le mors. Il permet également l'administration facilitée de médicaments et substances bénéfiques pour l'animal par voie orale.

Le mors selon l'invention peut être utilisé de manière passive, c'est-à-dire sans l'intervention directe du cavalier par exemple pour activer la salivation du cheval de manière agréable pendant une durée correspondant plus ou moins à une séance de travail à cheval ; il peut aussi être utilisé de manière passive ou active par le cavalier en selle pour récompenser son cheval par une action extemporanée. Le mors selon l'invention permet en effet d'utiliser à choix le canal d'un des deux canons par exemple pour récompenser le cheval. Pour ce faire, le cavalier peut fixer une poche, par exemple une poche souple, contenant une substance pâteuse, visqueuse type purée sur le montant de ses rênes, connectée au mors à travers un tuyau pour distribuer une quantité de pâte ou purée qui soit agréable au cheval comme récompense.

En outre ce mors permet de soigner en sécurité l'animal avec des médications orales directement injectées dans le milieu de la bouche du cheval qui sont plus facilement accepté puisque les canons sont lisses et puisque le cheval est habitué à accepter ce type de mors; en outre il est possible d'utiliser un tuyau suffisamment long pour sécuriser l'individu qui administre la substance d'un mouvement brutal de la tête du cheval. Cela permet aussi d'éloigner l'homme du cheval en le protégeant d'éventuelles réactions brutales du cheval.

Le débourrage d'un jeune cheval avec ce type de mors aura aussi comme conséquence une plus rapide et meilleure acceptation du mors.

Si le mors selon l'invention n'est pas relié à un réservoir et/ou il n'est pas utilisé, son canal peut être comblé avec une tige verrouillable épousant la forme du canal. Dans une autre variante cette tige peut aussi être utilisée pour nettoyer le canal.

L'invention concerne aussi un système pour envoyer des substances visqueuses et/ou liquides dans la bouche d'un animal comprenant
- un mors comprenant au moins deux canons, au moins un canon comprenant un canal le traversant longitudinalement d'une extrémité à l'autre
- un ou plusieurs réservoirs, par exemple une seringue et une poche, de ces substances visqueuses et/ou liquides
- un ou plusieurs tuyaux entre le mors et les réservoirs.

Selon un autre aspect indépendant de l'invention le système comprend aussi des moyens pour exercer automatiquement une pression dans le réservoir sur la substance visqueuse et/ou liquide, afin d'envoyer cette substance. Dans ce contexte l'adverbe « automatiquement » signifie sans actions de la part de l'utilisateur, sauf l'action initiale pour activer ou démarrer ces moyens.

Ces moyens peuvent comprendre une pièce métallique dans le réservoir, par exemple une seringue, avec un piston se déplaçant sous l'effet de son propre poids. Ces moyens peuvent en alternative comprendre un élément compressible élastiquement dans le réservoir, par exemple et de façon non limitative un ressort et/ou du gaz et/ou du silicone. Une commande mécanique, électromécanique ou avec un module électronique peut aussi être employé pour contrôler et provoquer l'envoi de substance à travers le mors, par exemple en contrôlant une pompe alimentée par une batterie.

De cette façon le cavalier doit seulement activer ces moyens, par exemple débloquer la pièce métallique, et la substance sera envoyée automatiquement dans la bouche du cheval sans aucune autre action de la part du cavalier. Dans une variante préférentielle cette activation peut être performée par le cavalier sans qu'il descende du cheval. Par exemple la seringue contenant la pièce métallique - ou bien une cartouche de gaz, une ressort, etc. - peut être fixée sur une lanière accessible par le cavalier sans descendre du cheval.

Dans le cas d'utilisation passive de la part de l'utilisateur le réservoir, par exemple une poche ou une seringue, comprend de préférence une substance liquide. Dans une variante ce réservoir envoye cette substance liquide par gravité en continue dans la bouche du cheval. Le réservoir est connecté à un tuyau qui se fixe au mors selon l'invention. Dans une variante ce tuyau est équipé d'un clamp ou de tout autre moyen qui après connexion peut stopper l'écoulement si le cavalier ne monte pas tout de suite à cheval. Dans une variante le réservoir est à usage unique. Dans une autre variante il est fixé à la partie du bridon dépassant du frontal en direction de la bouche à l'aide d'un bouton de fixation ou de tout autre système de fixation amovible et ce sur l'un seul des deux côtés ou sur les deux côtés.

Dans une autre variante le mors selon l'invention peut être utilisé de manière active, c'est-à-dire avec l'intervention directe du cavalier, par exemple pour récompenser extemporanément le cheval. Dans cette variante le réservoir d'une substance en purée peut être en forme d'une poche souple connectée avec le mors à travers d'un premier tuyau. Cette poche peut être directement accessible au cavalier ou bien être reliée à une pompe accessible au cavalier à travers d'un deuxième tuyau. Dans une variante préférentielle le cavalier va pousser la substance dans la bouche du cheval pour le récompenser au moment souhaité en agissant directement sur la poche souple ou bien en envoyant de l'air dans cette poche à travers la pompe et le deuxième tuyau. Ce dernier pourra être équipé d'une valve anti-retour pour que l'air injecté gonfle le double feuillet de la poche souple. Bien entendu, tout autre système ayant comme but final l'envoi de la substance dans la bouche du cheval de manière active de la part du cavalier peut être envisagé par l'homme du métier.

Le deuxième tuyau pourra être monté sur les rênes du côté qui mieux convient au cavalier qui donc pourra à tout moment envoyer de l'air dans la poche à double feuillet qui évacue la substance dans la bouche du cheval ou activer un système qui envoie une dose de récompense dans la bouche du cheval.

Dans une autre variante la pompe pour pousser de l'air dans la poche souple afin d'envoyer de la purée dans la bouche du cheval est intégrée dans un bâtonnet ou poignée que le cavalier peut tenir dans sa main. Ce bâtonnet ou poignée peut comprendre une dragonne. Dans une variante il a une longueur inférieure à 15 cm, par exemple entre 5 et 10 cm. Il est relié à un tuyau qui a suffisamment de jeux pour permettre au cavalier de pouvoir avancer ou reculer ses mains sur les rênes. Ce tuyau peut être fixé sur les rênes par le cavalier, en fonction de son type de monte et en fonction de la taille de son bridon.

Dans ce cas le cavalier a la même sensation de tenir une cravache ou un stick, mais dans le but de récompenser le cheval. Le cavalier peut appuyer sur le culot du bâtonnet ou poignée qui envoie une quantité d'air à la poche souple pour pousser la substance dans la bouche du cheval. Dans une autre variante le cavalier en appuyant sur le bâtonnet peut envoyer un signal qui permet d'envoyer la substance dans la bouche du cheval. Dans une autre variante le même bâtonnet comprend le réservoir de la substance en purée et le cavalier peut envoyer cette substance dans la bouche du cheval tout simplement appuyant sur le bâtonnet.

Dans une autre variante ce bâtonnet est monté comme extension sur un stick ou une cravache, par exemple en le vissant sur le stick ou en le reliant au stick à travers d'autres moyens de connexions, par exemple et de façon non limitative à travers d'un système de clipsage, des aimants, etc.

Dans une autre variante le bâtonnet est muni d'un système léger et peu encombrant pour le fixer facilement sur les rênes si le cavalier ne souhaite pas ou plus s'en servir, à l'aide par exemple d'une encoche ou d'une partie aimanté.

Selon un autre aspect indépendant de l'invention le mors selon l'invention ou tout autre mors peut être préchauffé pour qu'il soit plus facilement accepté par le cheval par un boîtier chauffant. Les mors en effet sont généralement métalliques et donc ils peuvent être très froids pour un cheval, surtout en hiver.

Avantageusement ce boîtier chauffant peut avoir la forme du mors. Dans une variante il est muni d'un interrupteur qui enclenche le chauffage du mors pendant la préparation du cheval. Le chauffage peut être obtenu par exemple et de façon non limitative par une résistance chauffante. Dans une autre variante le chauffage est enclenché lorsque le cavalier met le mors dans le boîtier. Dans une autre variante ce boîtier peut contenir deux ou plusieurs mors. Dans une autre variante ce boîtier est lavable et peut être équipé de lingettes, par exemple de lingettes en papier, ou de tout autre moyen permettant de tenir le mors propre et sec.

### Brève description des figures

Des exemples de mise en œuvre de l'invention sont indiqués dans la description illustrée par les figures annexées dans lesquelles :
La figure 1 illustre un vue d'un exemple d'un mors connu comprenant deux canons.
La figure 2A illustre un vue d'un mode de réalisation d'un mors à simple brisure selon l'invention.
La figure 2B illustre un vue d'un mode de réalisation d'un mors à double brisure selon l'invention.
La figure 3 illustre un vue d'un autre mode de réalisation d'un canon d'un mors selon l'invention.
La figure 4A illustre un vue d'un cheval sur lequel est fixé un mode de réalisation du système selon l'invention pour envoyer de façon passive une substance liquide dans sa bouche.
La figure 4B illustre un vue d'un cheval sur lequel est fixé un mode de réalisation du système selon l'invention pour envoyer de façon passive une substance liquide dans sa bouche et un autre mode de réalisation du système selon l'invention pour envoyer de façon active une substance visqueuse et/ou en purée dans sa bouche.
La figure 5 illustre un vue d'un mode de réalisation de la pièce en forme de Y qui permet d'envoyer dans le mors selon l'invention une substance liquide mélangée avec une substance visqueuse.
Les figures 6A à 6C illustrent les étapes pour remplir à nouveau un réservoir du système selon l'invention.
La figure 7 illustre un cavalier qui récompense son cheval en utilisant un bâtonnet appartenant à une cravache selon un mode de réalisation de l'invention.
La figure 8 illustre un cavalier qui a fixé le bâtonnet de la figure 7 aux brides.
La figure 9 illustre un possible usage vétérinaire d'un mode de réalisation du mors selon l'invention.

### Exemple(s) de mode de réalisation de l'invention

La figure 2A illustre une vue d'un mode de réalisation d'un mors 1 selon l'invention, qui dans cet exemple est un mors à simple brisure comprenant deux canons 10, l'invention s'appliquant aussi à des mors avec trois ou plusieurs canons 10 et avec plusieurs brisures. Chaque canon 10 est sensiblement linéaire et comprend deux extrémités. L'une de ces extrémité, notamment celle correspondant à la référence 12, est en forme d'anneau et est connectée à la correspondante extrémité de l'autre canon de façon à ce que les deux canons puissent être articulés l'un par rapport à l'autre, c'est-à-dire qu'ils puissent être déplacés l'un par rapport à l'autre.

A la différence d'un mors connu, dont un exemple est illustré sur la figure 1, au moins un canon 10 du mors 1 selon l'invention comprend un canal 100 traversant longitudinalement ce canon 10 d'une extrémité à l'autre, afin de permettre l'envoi d'une substance visqueuse et/ou liquide et/ou en purée non illustrée directement au milieu de la bouche d'un animal, par exemple un cheval. Sur la figure 2A un canon 10 est doté de ce canal 100. Chaque canal 100 en d'autres termes a donc deux extrémités qui peuvent correspondre aux deux extrémités de son canon 10, qui permettent l'introduction de la substance dans le mors 1 par l'extrémité externe du canon 10 opposée à 12 et l'expulsion par l'extrémité 12, c'est-à-dire directement au milieu de la bouche du cheval, ce qui rend la diffusion de cette substance plus efficace parce que sensiblement symétrique par rapport à la bouche.

Grâce à la présence de ce canal 100, les trous 30 sur la surface latérale extérieure des canons 10 connus, visibles sur la figure 1, ne sont plus nécessaires. La surface latérale extérieure des canons 10 peut donc être lisse, sans interruptions, ce qui évite complètement le risque de blesser la bouche du cheval et permet de ne pas changer la sensation dans la bouche du cheval par rapport à un mors classique avec les canons lisses. En outre le risque d'occlusion ce ces trous 30 quand le cheval mange est aussi supprimé.

Dans un mode de réalisation non illustré chaque canon peut comporter deux canaux, par exemple deux canaux parallèles l'un à l'autre et traversant longitudinalement le canon, ou un nombre arbitraire de canaux traversant longitudinalement chaque canon.

Dans la variante illustrée le canal 100 qui traversent le canon 10 d'une extrémité à l'autre est sensiblement horizontal, c'est-à-dire sensiblement parallèles à la direction principale du canon 10, ou en d'autres termes à la direction correspondant à sa longueur.

Dans une autre variante non illustrée le ou les canaux 100 qui traversent un canon 10 d'une extrémité à l'autre forment un angle par rapport à la direction horizontale définie ci-dessus : par exemple un canal 100 peut former avec la direction horizontale un angle dont l'amplitude est de préférence inférieure à 20°, par exemple 10°. En effet un canon 10 réel présente souvent une forme légèrement incurvée. En plus il comprend en correspondance de sa partie centrale une barre métallique horizontale, et la création d'un canon 10sensiblement horizontale en correspondance de cette barre pourrait compliquer la réalisation du mors selon l'invention ou permettrait d'avoir un mors moins robuste. Dans cette variante le canal, même si incliné, traverse toujours le canon d'une extrémité à l'autre, et permet l'envoi d'une substance directement au milieu de la bouche du cheval, car sa position en correspondance de l'extrémité 12 du canon qui est dans la bouche du cheval est inchangée par rapport à la variante d'un canal sensiblement horizontal de la figure 2A.

Dans les mors connus l'extrémité de chaque canon opposée à celle 12 est généralement connectée à un anneau 20, visible sur la figure 1, qui est fixé aux brides. Cet anneau 20 peut coulisser librement par rapport au canon.

Dans l'exemple illustré sur la figure 2A, chaque canon 10 est connecté à une pièce en forme d'un arc de cercle 22 qui ne le traverse pas, en évitant de percer le canal 100. Cette pièce 22 est fixée, par exemple collée, vissée ou soudée, au canon 10. Une coque 220 peut aussi être prévue dans le canon 10 en correspondance du point de fixation de la pièce 22. Cette pièce 22 ne peut pas coulisser par rapport au canon 10, sa position étant sensiblement fixe. Cependant cette fixation n'empêche pas un mouvement efficace des brides connectées à cette pièce et donc une bonne conduite du cheval par le cavalier. Un mors dans lequel les anneaux sont fixes et ergonomiques avec la commissure des lèvres du cheval est dit mors à olives ou mors olive. Dans ce cas il est aussi possible que le canal 100 présente un coude de façon à ce que son extrémité autre que celle 12 appartienne à la surface latérale d'un canon 10.

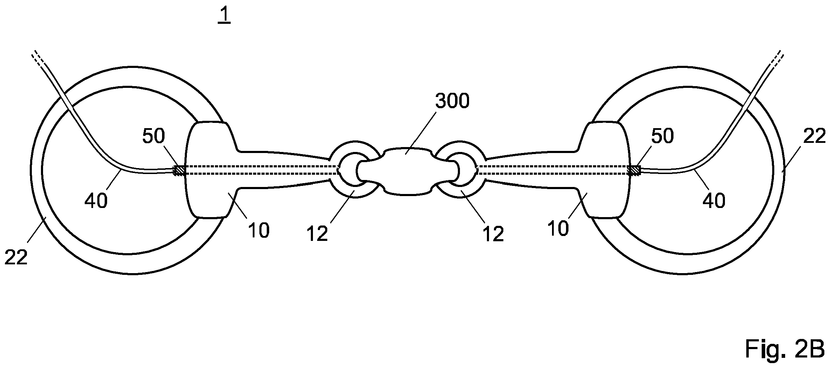

La figure 2B illustre un mors 1 à double brisure comprenant la partie centrale ou médaillon central 300.

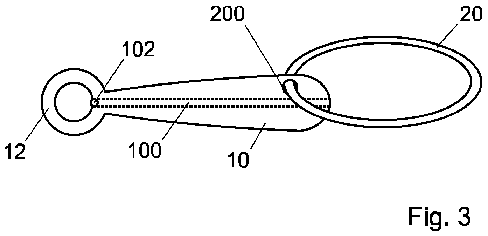

Dans une autre variante, illustrée sur la figure 3, le canon 10 est connecté à une pièce en forme d'anneau 20 et le traversant au dessous ou au dessus du canal 100 en correspondance d'un trou 200. Dans ce cas la pièce 20 peut coulisser par rapport au canon 10.

Dans une variante préférentielle chaque canon 10 du mors 1 peut comprendre une encoche 102, visible par exemple sur les figures 2A et 3, en correspondance de l'extrémité du canal 100 près de l'extrémité 12 du canon, afin d'éviter une possible occlusion du canal 100 si les extrémités 12 des deux canons, qui peuvent se déplacer l'une par rapport à l'autre, entrent en contact. Cependant cette possibilité d'occlusion est très faible, le mors 1 étant généralement bien tendu dans la bouche du cheval.

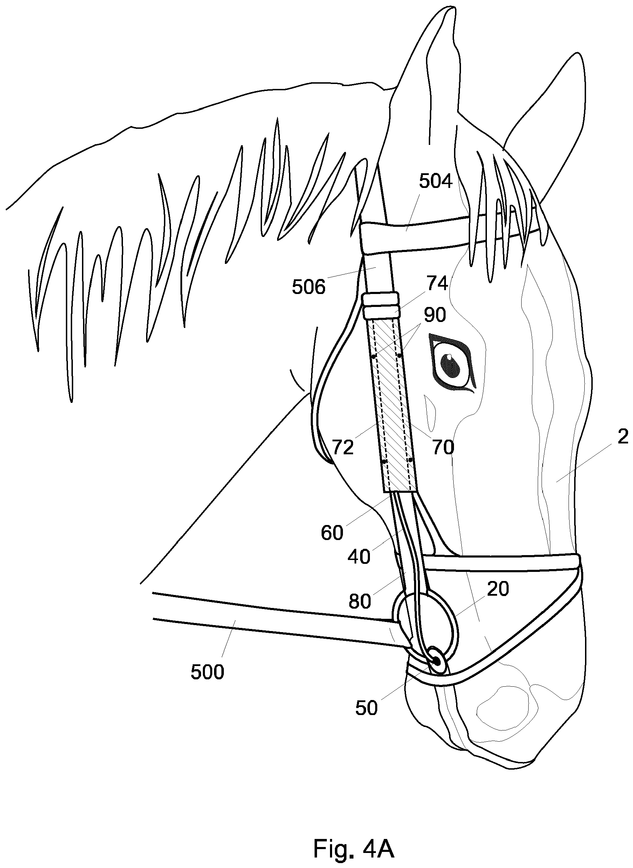

Afin d'envoyer une substance, par exemple un médicament, de la mousse, une gelée, un liquide acide ou toute autre substance liquide et/ou visqueuse dans la bouche du cheval, chaque canon 10 peut être connecté à un réservoir 70 de cette substance visqueuse et/ou liquide à travers un tuyau 40, visible sur les figures 2A à 4A, auquel il est connectée à travers d'une connexion 50. Dans une variante préférentielle le tuyau 40 est flexible. Dans une autre variante préférentielle le tuyau 40 est une tubulure. Dans la figure 4A le réservoir 70 est une seringue.

Selon un aspect ne faisant pas partie de l'invention la connexion 50 entre le mors 1 et le tuyau 40 et/ou la connexion 60 entre le tuyau 40 et le réservoir 70 est non standardisée, c'est-à-dire qu'il s'agit d'une connexion propriétaire qui permet de relier le mors 1 et/ou le réservoir 70 avec un seul et unique type de tuyau 40 et qui évite que le mors 1 et/ou le réservoir 70 puisse être relié à tout autre tuyau 40. Par exemple la connexion 50 et/ou 60 peut être du type mâle-femelle, avec un système de verrouillage, par exemple un système de vissage, ayant des dimensions, une forme et un filetage différents des dimensions, formes et filetages connus. Un exemple de cette connexion est décrit dans le document EP1689343 de Vygon.

Dans une autre variante la connexion 50 entre le mors 1 et le tuyau 40 et/ou la connexion 60 entre le tuyau 40 et le réservoir 70 est standardisée, par exemple du type luer lock intra veineux.

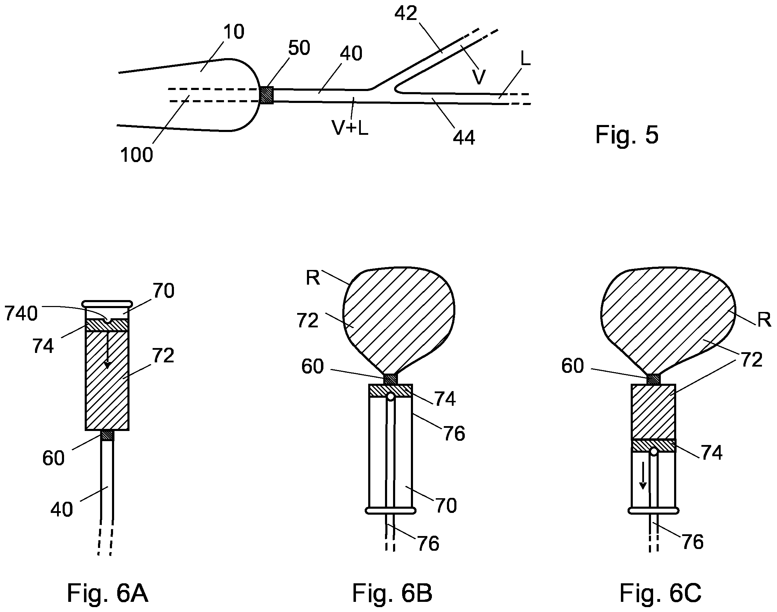

Dans une autre variante le tuyau 40 comprend une pièce en forme de Y visible sur la figure 5, afin d'envoyer dans le mors 1 deux substances différentes provenant de deux réservoirs différents. Par exemple un premier réservoir peut contenir une substance liquide L et être connecté au tuyau 42 de la connexion en forme de Y et deuxième réservoir peut contenir une substance visqueuse V et être connecté au tuyau 44 de la connexion en forme de Y. De cette façon les deux substances sont mélangées avant d'être envoyées dans la bouche de l'animal. Il est tout à fait possible de prévoir trois ou plus réservoirs et une pièce qui permette de mélanger leur respectives substances.

Dans une autre variante, il est possible d'envoyer dans le mors 1 deux substances différentes provenant de deux réservoirs différents à travers les deux canons 10, qui sont donc utilisés l'un pour une première substance et l'autre pour une deuxième substance. De cette façon il est possible d'éviter tout risque d'occlusion d'un canal dans les cas où l'une de ces deux substances est visqueuse. Par exemple un réservoir pourrait être la seringue 70, contenant une substance liquide permettant d'activer la salivation du cheval pendant une durée correspondant plus ou moins à une séance de travail à cheval et l'autre réservoir pourrait être une poche placée par exemple sur la tête du cheval et reliée aux brides, contenant une substance visqueuse permettant de récompenser le cheval. L'envoi de ces substances dans la bouche de cheval peut être automatique, c'est-à-dire sans l'intervention directe et active du cavalier, ou actif ou les deux. Dans une variante préférentielle de l'invention l'envoi de la substance liquide pour activer la salivation du cheval est passive, donc sans actions de la part du cavalier, et l'envoi de la substance visqueuse et/ou en purée pour récompenser est active, donc gérée par le cavalier.

Le canons 10 sont réalisés dans au moins un des matériaux suivants : métal - par exemple nickel, acier inox, laiton, cuivre - caoutchouc, matériaux synthétiques - par exemple résines - plastique, alliage.

L'invention concerne aussi un système pour envoyer des substances visqueuses et/ou liquides dans la bouche d'un animal, par exemple un cheval, visible dans un exemple sur la figure 4A, comprenant
- un mors 1 tel que décrit
- un ou plusieurs réservoirs 70, par exemple une seringue, de ces substances visqueuses et/ou liquides 72
- un ou plusieurs tuyaux 40 entre le mors 1 et les réservoirs 70.

Le réservoir 70, qui peut être rigide ou flexible, est fixé aux brides 80 par des moyens de fixation 90, par exemple des pinces, des bandes adhésives ou de type velcro, des éléments magnétiques, de la colle, des vis à insérer dans des trous des brides 80 ou tout autre mécanisme de verrouillage amovible. Dans l'exemple de la figure 4A la seringue est fixée à une lanière sur la ou les joues du cheval, mais elle pourrait aussi être fixée à la lanière entre les oreilles du cheval 2.

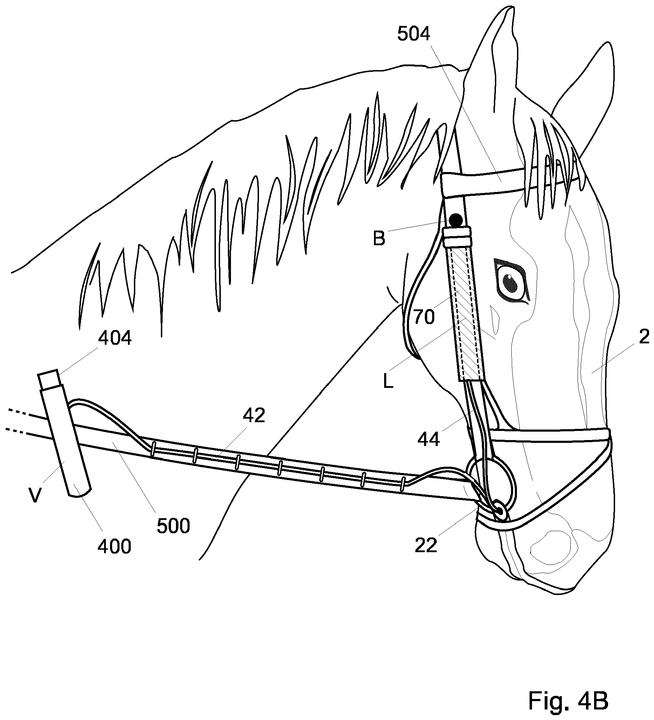

Dans l'exemple de la figure 4B une lanière en cuir 504 est montée et fixée sur la têtière et part des deux côtés 506 pour passer sous la jonction frontal têtière-frontale. La partie dépassant du frontal en direction de la bouche est équipé d'un bouton non illustré ou tout autre moyen de fixation pour fixer la poche ou la seringue 70 sur un seul ou bien sur les deux côtés 506. En d'autres mots la poche ou la seringue 70 est fixée à la partie du bridon 506 dépassant du frontal en direction de la bouche à l'aide d'un bouton de fixation ou de tout autre système de fixation amovible et ce sur l'un seul des deux côtés ou sur les deux côtés.

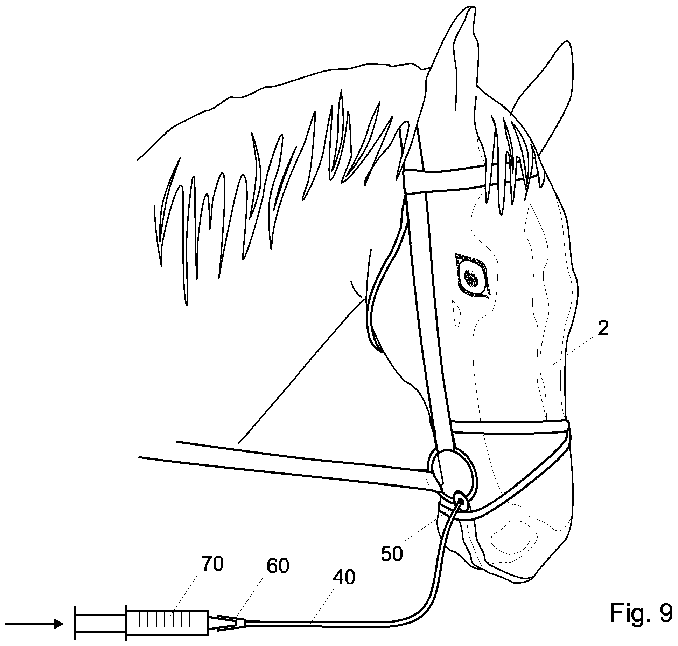

Dans la variante où le mors selon l'invention est utilisé dans le domaine vétérinaire, par exemple pour envoyer une substance orale médicamenteuse dans la bouche du cheval, chaque anneau 20 du mors peut être connecté à un élastique qui puisse passer derrière les oreilles du cheval ou à une lanière qui peut être montée facilement sur un licol pour utiliser ce mors sans risque et rapidement. La fig. 9 illustre un possible usage vétérinaire du mors selon l'invention, dans le quel un canon est connecté, à travers d'un tuyau 40, à une seringue 70 qui n'est fixée à aucune lanière mais que le cavalier peut utiliser directement afin d'envoyer un médicament dans la bouche du cheval en pressant sur l'extrémité de la seringue 70, comme indiqué par la flèche. Tout autre réservoir 70, par exemple une poche, peut être utilisé dans ce contexte.

Selon un autre aspect indépendant de l'invention le système comprend aussi des moyens pour exercer automatiquement une pression dans le réservoir 70 sur la substance visqueuse et/ou liquide 72, afin d'envoyer cette substance dans la bouche de l'animal.

Dans l'exemple illustré sur la figure 4A ces moyens comprennent une pièce métallique 74 dans la seringue 70, qui peut se déplacer sous l'effet de son propre poids. De cette façon le cavalier doit seulement débloquer la pièce métallique, et la substance 72 sera envoyée automatiquement dans la bouche du cheval sans autres actions de la part du cavalier et sans qu'il descende du cheval parce que la seringue 70 est fixée sur une lanière sur la joue du cheval aisément accessible par le cavalier.

La pièce métallique 74 a un poids qui peut dépendre de la viscosité de la substance 72 : à une viscosité plus importante correspondra en effet une pièce 74 plus lourde.

Si la substance 72 est plutôt liquide, elle pourrait se déplacer sous l'effet de la gravité. Dans ce cas la seringue peut être du type « low resitance ».

Dans une variante préférentielle le réservoir 70 comprend une substance liquide pour activer la salivation du cheval.

Les moyens pour exercer automatiquement une pression dans le réservoir 70 sur la substance visqueuse et/ou liquide 72 peuvent en alternative comprendre un élément compressible élastiquement dans le réservoir 70, par exemple et de façon non limitative un ressort et/ou du gaz et/ou de la silicone. Une commande mécanique, électromécanique ou avec un module électronique peut aussi être employée pour contrôler et provoquer l'envoi de substance à travers le mors, par exemple en contrôlant une pompe alimentée par une batterie.

La seringue 70 peut être à usage unique. Dans une autre variante elle n'est pas à usage unique. Dans ce dernier cas, comme illustré sur la figure 6A, quand la pièce métallique 74 est arrivée à l'extrémité de la seringue 70 connectée à travers la connexion 60 au tuyau 40, ce tuyau 40 est déconnecté de la connexion 60 et la seringue 70 est connectée par l'utilisateur à un réservoir externe R de la substance 72 à travers d'un système d'accrochage non illustré. Le réservoir peut avoir une forme sensiblement rectangulaire, par exemple celle d'une poche de perfusion. A ce point la pièce métallique 74 peut être déplacée par un utilisateur vers l'autre extrémité de la seringue 70 : dans l'exemple illustré sur les figures 6A à 6C, la pièce métallique 74 a un trou borgne 740 ayant une forme qui lui permet d'être connectée à l'extrémité arrondie d'une tige 76 que l'utilisateur introduit dans la seringue. Une fois la tige 76 bloquée sur la pièce 74, comme illustré sur la figure 6C l'utilisateur peut déplacer la tige 76 dans la direction indiquée par la flèche : le vide qui se crée permet de remplir à nouveau la seringue 70. Tout autre système qui permet à un utilisateur de déplacer la pièce 74 et donc de remplir à nouveau la seringue 70 peut être imaginé.

Dans une variante le tuyau 40 est équipé d'un clamp ou de tout autre moyen qui après connexion peut stopper l'écoulement si le cavalier ne monte pas tout de suite à cheval. Dans une variante le réservoir 70 est à usage unique.

Dans une autre variante le mors selon l'invention peut être utilisé de manière active, c'est-à-dire avec l'intervention directe du cavalier, par exemple pour récompenser extemporanément le cheval. Dans cette variante le réservoir d'une substance en purée peut être en forme d'une poche souple non illustrée connectée avec le mors 1 à travers d'un premier tuyau. Cette poche peut être directement accessible au cavalier ou bien être reliée à une pompe accessible au cavalier à travers d'un deuxième tuyau.

Dans une variante préférentielle le cavalier va pousser la substance dans la bouche du cheval pour le récompenser au moment souhaité en agissant directement sur la poche souple ou bien en envoyant de l'air dans cette poche à travers la pompe et le deuxième tuyau. Ce dernier pourra être équipé d'une valve anti-retour pour que l'air injecté gonfle le double feuillet de la poche souple. Bien entendu, tout autre système ayant comme but final l'envoi de la substance dans la bouche du cheval de manière active de la part du cavalier peut être envisagé par l'homme du métier.

Le deuxième tuyau pourra être monté sur les rênes du côté qui mieux convient au cavalier qui donc pourra à tout moment envoyer de l'air dans la poche à double feuillet qui évacue la substance dans la bouche du cheval ou activer un système qui envoie une dose de récompense dans la bouche du cheval.

Dans une autre variante, illustrée par exemple sur la figure 4B, la pompe pour pousser de l'air dans la poche souple afin d'envoyer de la purée dans la bouche du cheval est intégrée dans un bâtonnet ou poignée 400 que le cavalier peut tenir dans sa main. Ce bâtonnet ou poignée 400 peut comprendre une dragonne. Dans une variante il a une longueur inférieure à 15 cm, par exemple entre 5 et 10 cm. Il est relié à un tuyau 40 qui a suffisamment de jeux pour permettre au cavalier de pouvoir avancer ou reculer ses mains sur les rênes. Comme illustré sur la figure 4B, ce tuyau peut être fixé sur les rênes 500 par le cavalier, en fonction de son type de monte et en fonction de la taille de son bridon.

Dans ce cas le cavalier a la même sensation de tenir une cravache ou un stick, mais dans le but de récompenser le cheval. Le cavalier peut appuyer sur le culot 404 du bâtonnet ou poignée 400 qui envoie une quantité d'air à la poche souple pour pousser la substance dans la bouche du cheval. Dans une autre variante le cavalier en appuyant sur le bâtonnet peut envoyer un signal qui permet d'envoyer la substance dans la bouche du cheval. Dans une autre variante, illustrée sur la figure 4B, le même bâtonnet 400 comprend le réservoir de la substance en purée et le cavalier peut envoyer cette substance dans la bouche du cheval tout simplement appuyant sur le bâtonnet 400 ou sur son culot 404.

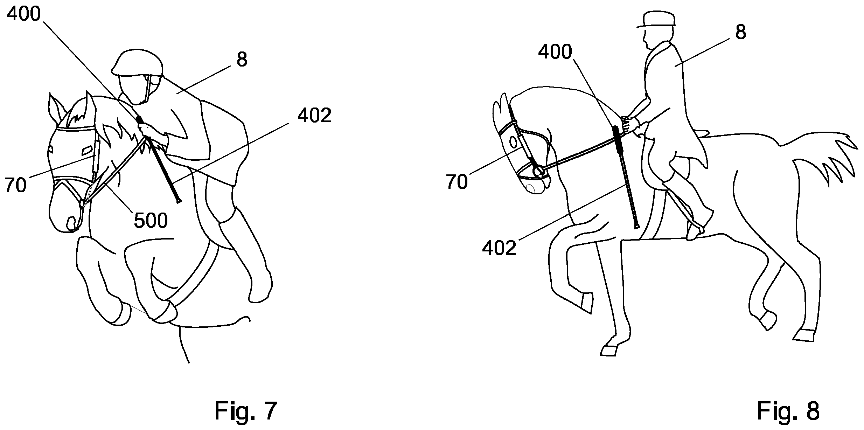

Dans une autre variante, illustrée par exemple sur les figures 7 et 8, ce bâtonnet 400 est monté comme extension sur un stick ou une cravache 402, par exemple en le vissant sur le stick 402 ou en le reliant au stick 402 à travers d'autres moyens de connexions, par exemple et de façon non limitative à travers d'un système de clipsage, des aimants, etc.

Dans une autre variante le bâtonnet 400 est muni d'un système léger et peu encombrant pour le fixer facilement sur les rênes 500 si le cavalier 8 ne souhaite pas ou plus s'en servir, à l'aide par exemple d'une encoche ou d'une partie aimanté, comme illustré sur la figure 8.

Dans la variante préférentielle de la figure 4B un premier réservoir, par exemple une seringue70, fixé à la partie du bridon 506 dépassant du frontal en direction de la bouche à l'aide d'un bouton B de fixation, envoie de façon passive, c'est-à-dire sans actions de la part de l'utilisateur, par exemple en exploitant la force de gravité, une substance liquide L pour activer la salivation du cheval. Un deuxième réservoir, par exemple en forme de bâtonnet 400, qui peut être tenu dans la main du cavalier, envoie de façon active, c'est-à-dire grâce à une action de la part de l'utilisateur, qui par exemple doit appuyer sur le culot 402 du bâtonnet 400, une substance visqueuse V ou en purée pour récompenser le cheval.

Dans cette variante le tuyau 42 qui relie le bâtonnet 400 au mors 1 selon l'invention et le tuyau 44 qui relie la seringue 70 au même mors peuvent être connectés à une pièce en forme de Y comme celle de la figure 5, afin d'envoyer dans le mors 1 deux substances différentes provenant de deux réservoirs différents. De cette façon les deux substances sont mélangées avant d'être envoyées dans la bouche de l'animal. Dans une autre variante, il est possible d'envoyer dans le mors 1 les deux substances L et V provenant des deux réservoirs différents à travers les deux canons 10, qui sont donc utilisés l'un pour la première substance L et l'autre pour la deuxième substance V.

Selon un autre aspect indépendant de l'invention le mors 1 selon l'invention ou tout autre mors peut être préchauffé pour qu'il soit plus facilement accepté par le cheval par un boîtier chauffant. Les mors en effet sont généralement métalliques et donc ils peuvent être très froids pour un cheval, surtout en hiver.

Avantageusement ce boîtier chauffant peut avoir la forme du mors. Dans une variante il est muni d'un interrupteur qui enclenche le chauffage du mors pendant la préparation du cheval. Le chauffage peut être obtenu par exemple et de façon non limitative par une résistance chauffante. Dans une autre variante le chauffage est enclenché lorsque le cavalier met le mors dans le boîtier. Dans une autre variante l'enclenchement du chauffage peut être commandé par un dispositif mobile de l'utilisateur, par exemple son smartphone, qui communique un signal d'enclenchement à travers une connexion sans fils au boîtier. Dans une autre variante ce boîtier peut contenir deux ou plusieurs mors. Dans une autre variante ce boîtier est lavable et peut être équipé de lingettes, par exemple de lingettes en papier, ou de tout autre moyen permettant de tenir le mors propre et sec.

### Numéros de référence employés sur les figures

- 1: Mors
- 2: Cheval
- 8: Cavalier
- 10: Canon
- 12: Extrémité en forme d'anneau du canon
- 20: Anneau
- 22: Pièce en forme d'un arc de cercle
- 30: Trou
- 40: Tuyau entre le mors et le réservoir
- 50: Connexion entre le mors et le tuyau
- 60: Connexion entre le tuyau et le réservoir
- 70: Réservoir
- 72: Substance visqueuse et/ou liquide
- 74: Pièce métallique
- 76: Tige
- 80: Brides
- 90: Moyens de fixation du réservoir aux brides
- 100: Canal
- 102: Encoche
- 200: Trou pour l'anneau 20
- 220: Coque
- 300: Partie centrale d'un mors à double brisure ou médaillon central
- 400: Bâtonnet ou poignée
- 402: Culot du bâtonnet
- 500: Rênes
- 504: Lanière fixée sur la têtière
- 506: Partie du bridon dépassant du frontal en direction de la bouche
- 740: Trou de la pièce métallique
- R: Réservoir externe
- L: Substance liquide
- V: Substance visqueuse
- L+V: Substance liquide plus substance visqueuse

## Revendications

1. Mors (1) comprenant au moins deux canons (10), tel qu'au moins un canon (10) comprend un ou plusieurs canaux (100) traversant longitudinalement ledit canon (10) d'une extrémité à l'autre, afin de permettre l'envoi d'une ou plusieurs substances visqueuses et/ou liquides (72) directement au milieu de la bouche d'un animal (2).

2. Le mors selon la revendications 1, ledit au moins un canon (10) comprenant au moins une encoche (102) destinée à éviter une occlusion dudit canal (100).

3. Système pour envoyer une ou des substances visqueuse et/ou liquide (72) dans la bouche d'un animal (2), comprenant
- un mors (1) selon l'une des revendications 1 à 2
- un ou plusieurs réservoirs (70) des substances visqueuses et/ou liquides (72)
- un ou plusieurs tuyaux (40) entre ledit mors (1) et lesdits réservoirs (70).

4. Le système selon la revendication 3, comprenant des moyens pour exercer automatiquement une pression dans un des réservoirs (70) sur ladite substance visqueuse et/ou liquide (72), afin d'envoyer ladite substance visqueuse et/ou liquide (72) dans la bouche de l'animal (2), lesdits moyens pour exercer automatiquement une pression comprenant une pièce métallique (74) dans le réservoir (70), ladite pièce métallique (74) se déplaçant sous l'effet de son propre poids.

5. Le système selon la revendication 4, ledit réservoir (70) constituant le corps d'une seringue, ladite pièce métallique (74), une fois arrivée à une extrémité de ladite seringue sous l'effet de son propre poids, pouvant être déplacée par un utilisateur vers l'autre extrémité de ladite seringue.

6. Le système selon la revendication 5, ledit corps de seringue étant agencé pour pouvoir être déconnecté dudit tuyau (40) et être connecté à un réservoir externe (R) afin de remplir à nouveau ledit corps de seringue lors du déplacement de ladite pièce métallique (74) par l'utilisateur vers l'autre extrémité de ladite seringue.

7. Le système selon l'une des revendications 3 à 6
- ledit réservoir (70) contenant une substance liquide (L),
- ledit système comprenant aussi un deuxième réservoir (400) contenant une substance visqueuse (V)
- ledit tuyau (40) comprenant une pièce en forme de Y (42, 44) afin de d'envoyer dans ledit mors (1) ladite substance liquide (L) mélangée avec ladite substance visqueuse (V).

8. Le système selon l'une des revendications 3 à 6, comprenant
- un premier réservoir (70) contenant une substance liquide (L),
- un deuxième réservoir (400) contenant une substance visqueuse et/ou en purée (V)
- ledit premier réservoir (70) étant connecté à un premier canon dudit mors (1) à travers d'un premier tuyau (44)
- ledit deuxième réservoir (400) étant connecté à un deuxième canon dudit mors (1) à travers d'un deuxième tuyau (44)
- ledit premier réservoir (70) comprenant des moyens (74) pour envoyer de façon passive ladite substance liquide (L) dans la bouche de l'animal à travers ledit premier tuyau (44)
- ledit deuxième réservoir (400) comprenant des moyens (404) pour envoyer de façon active ladite substance visqueuse et/ou en purée (V) dans la bouche de l'animal à travers ledit deuxième tuyau (42).

9. Le système selon la revendication 8, ledit deuxième réservoir (400) comprenant un bâtonnet et/ou une poche à double feuillet.

10. Le système selon l'une des revendications 8 à 9, comprenant des moyens de fixation (90, B) dudit premier réservoir (70) à une partie du bridon (506) dépassant du frontal en direction de la bouche.

11. Le système selon la revendication 9, comprenant des moyens de fixation dudit bâtonnet (400) sur les rênes (500).

12. Le système selon l'une des revendications 3 à 11, comprenant au moins une tige verrouillable et épousant la forme d'un canal (100) pour éviter toute occlusion du canal (100) quand le mors n'est pas utilisé et/ou pour nettoyer ledit canal (100).

13. Le système selon l'une des revendications 3 à 12, comprenant un boîtier chauffant pour chauffer le mors (1) pour qu'il soit plus facilement accepté par l'animal.

## Patentansprüche

1. Trense (1) mit mindestens zwei Mundstücken (10),so dass mindestens eines der Mundstücke (10) einen oder mehrere Kanäle (100) umfasst, die sich in Längsrichtung durch das Mundstück (10) von einem Ende zum anderen erstrecken, um so eine Abgabe einer oder mehrere viskoser und/oder flüssiger Substanzen (72) direkt in den mittleren Bereich eines Tiermundes (2) zu ermöglichen.

2. Trense nach Anspruch 1, wobei das mindestens eine Mundstück (10) mindestens eine Aussparung (102) umfasst, um eine Okklusion des besagten Kanals (100) zu vermeiden.

3. System zur Abgabe einer oder mehrerer viskoser und/oder flüssiger Substanzen (72) in den Mund eines Tieres (2), umfassend
- eine Trense (1) nach einem der Ansprüche 1 oder 2
- einen oder mehrere Behälter (70) für viskose und/oder flüssige Stoffe (72)
- ein oder mehrere Schläuche (40) zwischen der Trense (1) und den besagten Behältern (70).

4. System nach Anspruch 3, umfassend Mittel zur automatischen Druckausübung in einem der Behälter (70) auf die viskose und/oder flüssige Substanz (72), um die viskose und/oder flüssige Substanz (72) in den Mund des Tieres (2) zu leiten,
wobei die Mittel zur automatischen Druckausübung ein Metallelement (74) im Behälter (70) umfassen, wobei sich das Metallelement (74) unter seinem Eigengewicht bewegt.

5. System nach Anspruch 4, wobei der Behälter (70) den Körper einer Spritze bildet, wobei sobald das Metallelement (74), das eine Ende der Spritze (70) unter seinem Eigengewicht erreicht hat, kann es von einem Benutzer an das andere Ende der Spritze bewegt werden.

6. System nach Anspruch 5, wobei der Spritzenkörper so angeordnet ist, dass er von dem Schlauch (40) trennbar ist und mit einem externen Behälter (R) verbunden werden kann, um den Spritzenkörper nachzufüllen, wenn das Metallelement (74) vom Benutzer an das andere Ende der Spritze bewegt wird.

7. Das System nach einem der Ansprüche 3 bis 6 umfassend
- besagten Behälter (70) der eine flüssige Substanz (L) enthält,
- wobei das System auch einen zweiten Behälter umfasst (400), der eine viskose Substanz (V) enthält,
- wobei der Schlauch (40) einen Y-förmigen Teil (42, 44) umfasst, um die flüssige Substanz (L) vermischt mit der viskosen Substanz (V) in die Trense (1) abzugeben.

8. Das System nach einem der Ansprüche 3 bis 6 umfassend
- einen ersten Behälter (70) der eine flüssige Substanz (L) enthält,
- einen zweiten Behälter (400) der eine viskose Substanz (V) und/oder eine breiförmige Substanz (V) enthält,
- wobei der erste Behälter (70) mit einem ersten Mundstück der besagten Trense (1) über einen ersten Schlauch (44) verbunden ist
- wobei der zweite Behälter (400) mit einem zweiten Mundstück der besagten Trense (1) über einen zweiten Schlauch (42) verbunden ist
- der erste Behälter (70) umfassend Mittel (74) zur passiven Abgabe der besagten flüssigen Substanz (L) über den besagten ersten Schlauch (44) in den Mund des Tieres.
- der besagte zweite Behälter (400) umfassend Mittel (404) zur aktiven Abgabe der besagten viskosen Substanz (V) und/oder breiförmigen Substanz (V) über den besagten zweiten Schlauch (42) in den Mund des Tieres.

9. Das System nach Anspruch 8, wobei der zweite Behälter (400) ein Stäbchen und/oder eine doppelwandige Tasche umfasst.

10. Das System nach einem der Ansprüche 8 bis 9 umfassend Befestigungsmittel (90, b) des ersten Behälters (70) mit einem Teil des Backenstücks (506) welches den Stirnbereich in Richtung des Mundes überschreitet.

11. Das System nach Anspruch 9, umfassend Befestigungsmittel des Stäbchens (400) auf den Zügeln (500).

12. Das System nach einem der Ansprüche 3 bis 11 mindestens umfassend ein verschliessbares Rohr, welches die Form eines Kanals (100) bildet um jede Okklusion des Kanals (100) zu verhindern, wenn die Trense nicht genutzt wird, und oder zum Reinigen des Kanals (100).

13. Das System nach einem der Ansprüche 3 bis 12, umfassend ein Gehäuse zum Heizen der Trense (1) um besser von dem Tier angenommen zu werden.

## Claims

1. Bit including at least two mouthpieces (10), such that at least one mouthpiece (10) comprises one or several channels (100) extending longitudinally through said mouthpiece(10) from one end to the other end, so as to allow the sending of one or more viscous and/or liquid substances (72) directly in the middle of the mouth of an animal (2).

2. The bit according to claim 1, said at least one mouthpiece (100) comprising at least one notch (102) configured to avoid the occlusion of said channel (100).

3. System for sending liquid and/or viscous substances (72) in the mouth of an animal (2), comprising
- a bit (1) according to any of claims 1 to 2
- one or more reservoirs (70) of the viscous and/or liquid substances (72)
- one or more pipes (40) between said bit (1) and said reservoirs (70).

4. The system according to claim 3, comprising means for automatically applying pressure in one of the reservoirs (70) on said viscous and/or liquid substance (72), so as to send said viscous and/or liquid substance (72) into the mouth of the animal (2), said means for automatically exerting pressure comprising a metal piece (74) in the reservoir (70), said metal piece (74) moving under the effect of its own weight.

5. The system according to claim 4, said reservoir (70) constituting the body of a syringe, said metal piece (74), once arrived at one end of said syringe under the effect of its own weight, can be moved by a user to the other end of said syringe.

6. The system according to claim 5, said syringe body being configured in a way that allows it to be disconnected from said pipe (40) and to be connected to an external reservoir (R) in order to fill said syringe body again when the user displaces said metal piece (74) into the direction of the other end of said syringe.

7. The system according to any of claims 3 to 6,
- said reservoir (70) containing a liquid substance (L),
- said system further comprising a second reservoir (400) containing a viscous substance (V)
- said pipe (40) comprising a Y-shaped part (42, 44) so as to send into said bit (1) said liquid substance (L) mixed with said viscous substance (V).

8. The system according to any of claims 3 to 6, comprising
- a first reservoir (70) containing a liquid substance (L),
- a second reservoir (400) containing a viscous material and/or puree (V)
- said first reservoir (70) being connected to a first mouthpiece of said bit (1) through a first pipe (44)
- said second reservoir (400) being connected to a second mouthpiece of said bit (1) through a second pipe (44)
- said first reservoir (70) comprising means (74) to supply in a passive way said liquid substance (L) in the animal's mouth through said first pipe (44)
- said second reservoir (400) containing means (404) for sending said viscous substance and/or puree (V) actively into the animal's mouth through said second pipe (42).

9. The system according to the claim 8, said second reservoir (400) comprising a rod and/or a double-sheeted bag.

10. The system according to any of claims 8 to 9, comprising fixing means (90, B) of said first reservoir (70) to a part of the bridle (506) exceeding the headpart towards the mouth.

11. The system according to claim 9, comprising means for fixing said rod (400) on the reins (500).

12. The system according to any of claims 3 to 11, comprising at least one lockable rod which conforms to the shape of a channel (100) to prevent the occlusion of the channel (100) while the bit is not used and/or to clean said channel (100).

13. The system according to any of claims 3 to 12, comprising a heater housing for preheating the bit (1) so that it can be easily accepted by the animal.
